Europäisches Patentamt

European Patent Office

Office européen des brevets

(19)

(11) Veröffentlichungsnummer : **0 334 192 B1**

(12) **EUROPÄISCHE PATENTSCHRIFT**

(45) Veröffentlichungstag der Patentschrift :
02.09.92 Patentblatt 92/36

(51) Int. Cl.⁵ : **H04J 14/00**

(21) Anmeldenummer : 89104629.4

(22) Anmeldetag : 15.03.89

(54) Überwachung in Glasfaser-Duplex-Übertragungssystemen.

(30) Priorität : 22.03.88 DE 3809601

(43) Veröffentlichungstag der Anmeldung :
27.09.89 Patentblatt 89/39

(45) Bekanntmachung des Hinweises auf die
Patenterteilung :
02.09.92 Patentblatt 92/36

(84) Benannte Vertragsstaaten :
AT BE CH DE FR GB IT LI NL SE

(56) Entgegenhaltungen :
EP-A- 0 160 748

(56) Entgegenhaltungen :
SIEMENS/TELCOM REPORT, Band 10, März
1987, Special, Seiten 109-114, Erlangen, DE; E.
BRAUN et al.: "Überwachung undzusätzliche
Dienste der Digitalübertragungs-systeme für
Lichtwellenleiter"
PROCEEDINGS OF THE 1982 INTERNATIO-
NAL SYMPOSIUM ON SUBSCRIBER LOOPS
AND SERVICES, Toronto, 20.-24. September
1982, Seiten214-219, IEEE, New York, US; U.
HORN et al.: "Service-integrated optical subscriber loop systems research and industrial
prototypeprojects guided by the Deutsche
Bundespost"

(73) Patentinhaber : SIEMENS
AKTIENGESELLSCHAFT
Wittelsbacherplatz 2
W-8000 München 2 (DE)

(72) Erfinder : Fütterer, Augustin, Dipl.-Ing. (FH)
Sonnenweg 4 d
W-8057 Eching (DE)

## Beschreibung

Die Erfindung betrifft ein Verfahren entsprechend dem Oberbegriff des Anspruchs 1.

Im Hinblick auf die optimale Ausnutzung bereits verlegter Lichtwellenleiter-Kabel ist der Duplexbetrieb besonders interessant, bei dem auf einem Kabel in beiden Übertragungsrichtungen und bei gleicher Wellenlänge Signale übertragen werden. Zu diesem Zweck werden beispielsweise mittels eines sogenannten Taper-Verzweigers, der als optischer Richtungskoppler wirkt, an den Enden des Lichtwellenleiterkabels die Sendesignale ein- und die Empfangssignale ausgekoppelt. Dabei tritt insbesondere durch die Rayleigh-Rückstreuung in der Glasfaser sowie evt. noch im Verzweiger und an den Verbindungsstellen ein geringer Anteil des Sendesignals auch am Empfänger der gleichen Endstelle auf. Solange das Empfangssignal mit ausreichendem Pegel empfangen wird, stört dieser vergleichsweise kleine Teil des rückgestrahlten Sendesignals den Empfang nicht. Bei Unterbrechung der Übertragungsstrecke beispielsweise durch Kabelbruch fällt das eigentliche Empfangssignal weg, so daß bei aufgeregelten und damit empfindlichen Empfängereingängen das rückgestreute Sendesignal ein Empfangssignal vortäuschen kann. In diesem Falle sprechen bekannte Überwachungsschaltungen nicht an und es kommt nicht zur Alarmierung in den Endstellen wegen Streckenausfall.

Aus der EP-A1-0 160 748 ist ein Verfahren zur Codefehlereinblendung in digitale Übertragungssignale und ein entsprechender Codeumsetzer bekannt, bei dem unter der Vorraussetzung redundanter Übertragungscodes Codefehler so eingeblendet werden, daß keine Verfälschung des Informationsinhalts der digitalen Signale entsteht. Durch die Einblendung der empfangsseitig erkennbaren Codefehler können dabei zusätzliche Informationen, beispielsweise Telemetriesignale oder ein Dienstkanal für Sprachsignale übertragen werden. Die Einblendung der Codefehler erfolgt dadurch, daß zur Umcodierung wenigstens eines Wortes der Übertragungssignale ein gegenüber dem vorgesehenen Modenzustand veränderter Modenzustand verwendet wird.

Die Aufgabe bei der vorliegenden Erfindung besteht darin, eine Möglichkeit zur Überwachung eines Glasfaser-Duplex-Übertragungssystems zu schaffen, durch das ein Streckenausfall mit Sicherheit erkannt wird.

Erfindungsgemäß wird die Aufgabe durch ein Verfahren der eingangs erwähnten Art gelöst, daß durch die Merkmale des Kennzeichens des Patentanspruchs 1 weitergebildet ist. Von besonderem Vorteil ist beim erfindungsgemäßen Verfahren die Möglichkeit, die gesamte Überwachung auf die elektrische Seite des Übertragungssystems zu konzentrieren und dabei ohne Abzweigung eines Teils des Sende- oder Empfangslichtes auszukommen. Zweckmäßige Weiterbildung des erfindungsgemäßen Verfahrens sind in den Patentansprüchen 2 bis 4 näher beschrieben.

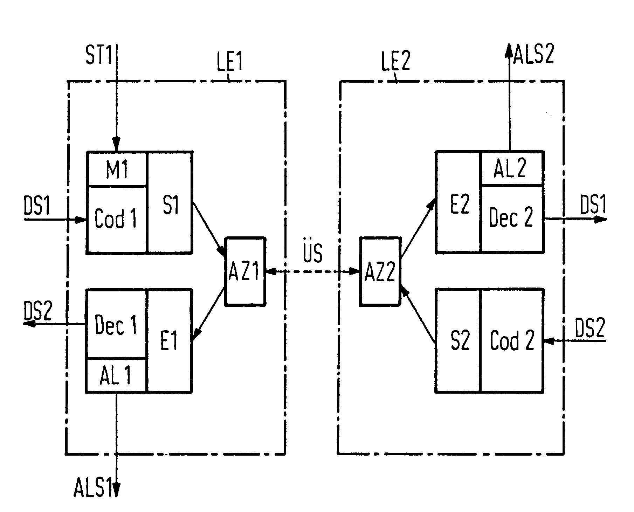

Die Erfindung soll im folgenden anhand eines in der Zeichnung dargestellten Ausführungsbeispiels näher erläutert werden.

Die in der Zeichnung dargestellte FIG zeigt in schematischer Darstellung ein Glasfaser-Duplex-Übertragungssystem mit einer ersten und einer zweiten Endstelle LE1, LE2, zwischen denen sich eine Übertragungsstrecke ÜS befindet, die Zwischenregeneratoren enthalten kann und mit einem einzigen Lichtwellenleiter auskommt. Die erste Endstelle weist im Anschluß an einen Eingang für die ersten zu übertragenden digitalen Signale DS1 einen ersten Umcodierer COD1 auf, der mit einem ersten Modenspeicher M1 gekoppelt ist. Über einen ersten Steuereingang ST1 erhält der Modenspeicher M1 im Rhythmus der zu erzeugenden Codefehler Steuersignale, durch die der Zustand des Modenspeichers M1 verändert wird. Der erste Umcodierer COD1 ist als 5B6B Umcodierer ausgebildet, der in Abhängigkeit vom vorhergehenden Eingangssignal einen von zwei möglichen Modenzuständen für das folgende digitale Signal auswählt. Diese Auswahl wird durch das am Modenspeicher M1 anstehende Steuersignal ST1 verändert. Dadurch wird das dem falschen Modenzustand entsprechende Codewort erzeugt und an den ersten Sender S1 abgegeben, der einen Treiberverstärker und eine Laserdiode mit Regelschaltung beinhaltet und ein dem umcodierten Signal entsprechendes optisches Signal erzeugt. Dieses optische Signal wird an den ersten Abzweiger AZ1 abgegeben, der als SM-Verzweiger in Taperbauweise ausgebildet ist und das optische Sendesignal in den Lichtwellenleiter in der Übertragungsstrecke ÜS einkoppelt.

Der erste Abzweiger AZ1 dient gleichzeitig zur Auskopplung des Empfangssignals aus dem Lichtwellenleiter der Übertragungsstrekke ÜS. Das Empfangssignal wird dem ersten Empfänger E1 zugeführt, der in bekannter Weise als PIN-Diodenempfänger ausgebildet ist und ein elektrisches Signal an den ersten Decoder Dec1 abgibt, in dem zum einen eine 6B5B-Umformung erfolgt und zum anderen eine Überwachung auf Codeworte, die nicht nach dem sich aus der Vorgeschichte ergebendem Mode sondern nach dem falschen Mode gebildet worden sind und dabei mit einer bestimmten Zeitperiode auftreten. Diese Codeworte werden ebenfalls decodiert, wobei eine eindeutige Zuordnung zum richtigen Primärwert möglich ist, gleichzeitig wird ein Wählersignal an eine erste Alarmierungsschaltung AL1 abgegeben, die einen Speicher beinhaltet. Der Speicher enthält dabei neben einem Resonanzverstärker einen Speicherkondensator mit angeschlossenem Schwellwertschalter. Bei periodischem Auftreten des Fehlersignals spricht der Schwellwertschalter an und gibt ein erstes Alarmsignal ALS1 an einen entsprechenden Ausgang ab, der mit weiteren Alarmierungseinrichtungen und gegebenenfalls auch mit einer Einrichtung zur Streckenumschaltung verbunden werden kann.

Im Anschluß an die Übertragungsstrecke ÜS ist in der zweiten Endstelle ein zweiter Abzweiger AZ2 vorgesehen, der die Empfangssignale an einen zweiten Empfänger E2 abgibt. Vom zweiten Empfänger E2, der ebenfalls als PIN-Diodenempfänger ausgebildet ist, werden die erzeugten elektrischen Signale an einen zweiten Decoder Dec2 abgegeben, der ebenfalls eine 6B5B-Umformung vornimmt und außerdem die Signale auf das Auftreten der spezifischen Codefehler überwacht und diese bei der Umformung entsprechend korrigiert. Vom zweiten Decoder Dec2 wird das erste digitale Signal DS1 an einem Ausgang zur weiteren Verarbeitung abgegeben. Gleichzeitig werden entsprechende Fehlerimpulse an eine zweite Alarmierungsschaltung AL2 abgegeben, die über einen gegenüber der ersten Alarmierungsschaltung AL1 inversen Ausgang verfügt, so daß von der zweiten Alarmierungsschaltung nur dann ein zweites Alarmsignal ALS2 abgegeben wird, wenn in der zweiten Alarmierungsschaltung das Potential am Speicher einen vorbestimmten Wert unterschreitet.

Die Sendeseite der zweiten Endstelle LE2 ist unterschiedlich zur ersten Endstelle LE1 ausgebildet. Mit einem Eingang für die in Gegenrichtung zu übertragenden digitalen Signale DS2 ist ein zweiter Umcodierer COD2 verbunden, der eine 5B6B-Umformung vornimmt und die umgeformten Signale an einen zweiten Laserdiodensender S2 mit Treiberverstärker und Regelschaltung abgibt. Die zweite Endstelle LE2 enthält damit keinen Eingang für Steuersignale zur Codefehlereinblendung.

Die beiden Endstellen LE1, LE2 können auch vollkommen identisch aufgebaut werden, so daß in jeder der beiden Endstellen die Möglichkeit zur Codefehlereinblendung besteht. Die Alarmierungsschaltungen AL1, AL2 weisen dann jeweils einen nichtinvertierenden und einen invertierenden Ausgang auf, die je nach dem beschaltet werden, in welcher der beiden Endstellen die Codefehlereinblendung erfolgt, diese kann jedoch immer nur in einer der beiden Endstellen vorgenommen werden.

In der Praxis ist eine Einblendung der Codefehler mit einer Rate von $1 \times 10^{-6}$ zweckmäßig, sofern die zur Übertragung vorgesehenen digitalen Signale DS1, DS2 Bitraten zwischen 10 und einigen 100 Mbit/sec aufweisen.

Zur Sicherung der Überwachung gegen unbeabsichtigte Codefehler kann erst bei dem Auftreten der speziellen Codefehler ein Alarmsignal erzeugt werden. Besonders vorteilhaft ist die beschriebene Verwendung eines Resonanzverstärkers, der auf die Periode der Codefehlereinblendung eingestellt ist und damit nur Fehlerimpulse an die Alarmierungsschaltungen weiterleitet, die mit der vorgesehenen Periode der Codefehlereinblendung auftreten.

Eine weitere Möglichkeit zur Erzeugung der speziellen Codefehler ergibt sich dann, wenn als Übertragungscode ein redundanter Code mit wenigstens einem "verbotenen" Codewort vorgesehen ist. In diesem Falle kann bei der sendeseitigen Umformung anstelle eines vergleichsweise häufig auftretenden Codewortes das für die Übertragung nicht vorgesehene, also verbotene Codewort erzeugt werden, deren Auftreten dann von den Decodern überwacht wird. Damit besteht auch die Möglichkeit, Glasfaser-Duplex-Übertragungssysteme zu überwachen, in denen kein Alphabetcode mit mehreren möglichen Modenzuständen verwendet wird.

## Patentansprüche

1. Verfahren zur Überwachung in einem zwei Endstellen und eine Lichtwellenleiter-Übertragungsstrecke enthaltenden Duplex-Übertragungssystem, in dem bei gleicher Wellenlänge digitale Signale in beiden Richtungen übertragen werden, **dadurch gekennzeichnet,** daß die digitalen Signale vor der Übertragung in einen redundanten Code umgeformt werden, daß in zeitlichen periodischen Abständen mit einem empfangsseitig erkennbaren spezifischen Codefehler behaftete Übertragungssignale von der ersten Endstelle in die umgeformten digitalen Signale eingeblendet werden,
daß in beiden Endstellen das Empfangssignal auf das Auftreten von spezifischen Codefehlern überwacht wird,
daß in der zweiten Endstelle bei Auftreten der spezifischen Codefehler das Empfangssignal entsprechend korrigiert und außerdem auf eine ungestörte Übertragungsstrecke geschlossen wird und
daß in der ersten Endstelle bei Auftreten der spezifischen Codefehler im Empfangssignal ein Alarmsignal wegen Ausfall der Übertragungsstrecke erzeugt wird.

2. Verfahren nach Anspruch 1, **dadurch gekennzeichnet,** daß das Alarmsignal erst nach mehrmaligem periodischen Auftreten der spezifischen Codefehler erzeugt wird.

3. Verfahren nach Anspruch 1, **dadurch gekennzeichnet,** daß die digitalen Signale vor der Übertragung in einen redundanten Alphabetcode mit mehreren möglichen Moden umgeformt werden und die spezifischen Codefehler dadurch erzeugt werden, daß während der Umcodierung der digitalen Signale anstelle des vorgesehenen Modenzustandes ein anderer Modenzustand verwendet wird.

4. Verfahren nach Anspruch 1, **dadurch gekennzeichnet,** daß die digitalen Signale vor der Übertragung in einen redundanten Code mit wenigstens einem verbotenen Codewort umgeformt werden und die spezifischen Codefehler dadurch erzeugt werden, daß anstelle eines bestimmten, vergleichsweise häufig auftretenden Codewortes das für die Übertragung nicht vorgesehene, verbotene Codewort erzeugt wird.

## Claims

1. Method of supervision in a duplex transmission system which contains two terminal station transmission routes and one optical waveguide transmission route and in which digital signals are transmitted in both directions at the same wavelength, characterised in that the digital signals are converted into a redundant code before transmission, in that transmission signals, affected by a specific code error detectable on the receive side, from the first terminal station, are superimposed into the converted digital signals at periodic intervals of time, in that the receiver signal is monitored for the occurrence of specific code errors in both terminal stations, in that, if specific code errors occur in the second terminal station, the receiver signal is correspondingly corrected and, in addition, an undisturbed transmission route is assumed, and in that, if specific code errors in the receiver signal occur in the first terminal station, an alarm signal is generated due to failure of the transmission route.

2. Method according to Claim 1, characterised in that the alarm signal is not generated until after repeated periodic occurrence of the specific code errors.

3. Method according to Claim 1, characterised in that the digital signals are converted into a redundant alphabetic code with several possible modes before transmission and the specific code errors are generated by a different mode distribution being used instead of the intended mode distribution during the transcoding of the digital signals.

4. Method according to Claim 1, characterised in that the digital signals are converted into a redundant code with at least one prohibited codeword before the transmission and the specific code errors are generated by the prohibited codeword, not intended for transmission, being generated instead of a certain, comparatively frequently occurring codeword.

## Revendications

1. Procédé de contrôle dans un système de transmission duplex, qui comporte deux postes terminaux et une voie de transmission formant guide d'ondes optiques, et dans lequel, pour une même longueur d'onde, des signaux numériques sont transmis dans les deux directions,
caractérisé par le fait
que les signaux numériques sont convertis, avant la transmission, en un code redondant,
qu'à des intervalles de temps périodiques, des signaux de transmission affectés d'une erreur de code spécifique, identifiable côté réception, sont insérés par le premier poste terminal dans les signaux numériques convertis, que dans les deux postes terminaux, le signal de réception est contrôlé pour ce qui concerne l'apparition éventuelle d'erreurs de code spécifiques,
que dans le second poste terminal, lors de l'apparition des erreurs de code spécifiques, le signal de réception est corrigé de façon correspondante et qu'en outre la conclusion en est tirée qu'il s'agit d'une voie de transmission non perturbée, et
que dans le premier poste terminal, lors de l'apparition des erreurs de code spécifiques dans le signal de réception, un signal d'alarme est produit en raison d'une défaillance de la voie de transmission.

2. Procédé suivant la revendication 1, caractérisé par le fait que le signal d'alarme n'est produit qu'après l'apparition périodique, à plusieurs reprises, des erreurs de code spécifiques.

3. Procédé suivant la revendication 1, caractérisé par le fait que les signaux numériques sont convertis avant la transmission, en un code alphabétique redondant comportant plusieurs modes possibles et que les erreurs de code spécifiques sont produites grâce au fait que pendant le codage des signaux numériques, on utilise, à la place de l'état de mode prévu, un autre état de mode.

4. Procédé suivant la revendication 1, caractérisé par le fait que les signaux numériques sont convertis, avant la transmission, en un code redondant comportant au moins un mot de code interdit et que les erreurs de code spécifiques sont produites par le fait que le mot de code interdit, non prévu pour la transmission, est produit à la place d'un mot de code déterminé, qui apparaît comparativement fréquemment.